# EUROPÄISCHE PATENTSCHRIFT

(11) **EP 1 215 139 B1**
(45) Veröffentlichungstag und Bekanntmachung des Hinweises auf die Patenterteilung: **11.08.2004**
(21) Anmeldenummer: 01127800.9
(22) Anmeldetag: 22.11.2001
(51) Int. Cl.: B65G 1/04

(54) **Fördergerät**
Conveying apparatus
Appareil de convoyage

(30) Priorität: 12.12.2000 DE 20021029 U
(43) Veröffentlichungstag der Anmeldung: 19.06.2002
(73) Patentinhaber: viastore systems GmbH, 70469 Stuttgart (DE)
(72) Erfinder: Schumacher, Meinhard, Dr., 74889 Sinsheim (DE)
(74) Vertreter: KOHLER SCHMID + PARTNER

(56) Entgegenhaltungen:
- DE-A- 2 319 058
- DE-A- 19 801 856
- DE-U- 20 021 029

## Beschreibung

Die Erfindung bezieht sich auf ein Fördergerät mit auf einem verschiebbaren Tisch gelagerten, angetriebenen Transportband. Mittels eines solchen z.B. aus DE-A-19801856 bekannten Fördergerätes werden Regale be- und entladen. Dabei werden diese Fördergeräte vor allem in Regalstraßen verwendet und können beidseits Fördergut aufnehmen bzw. in den Regalen ablagern. Wenn der Antrieb des Transportbandes zu spät abgestellt wird, besteht die Gefahr, dass das Fördergut entweder herunterfällt oder aber ungewollt auf einem gegenüberliegenden Regal abgelagert wird.

Die Aufgabe der vorliegenden Erfindung ist es, einerseits die Möglichkeit offen zu halten, dass an beiden Enden des Transportbandes Fördergut aufgenommen und abgelagert werden kann und andrerseits mit Sicherheit zu erreichen, dass selbst bei einem ungewollten Weiterlaufen des Transportbandes das Fördergut so lange auf dem Transportband verbleibt, bis das Fördergerät sich an der vorgesehenen Stelle befindet. Dies wird erfindungsgemäß durch mindestens zwei an den beiden Enden des Fördergerätes in die Bahn des Fördergutes eingreifende, heb- und senkbare Anschläge erreicht.

Beim Auslagern eines Fördergutes von einem Regal wird der diesem zugewandte Anschlag abgesenkt, während der andere in seiner Sperrstellung verbleibt. Das Fördergut kann dann vom Transportband übernommen und bis an den Anschlag befördert werden. Anschließend können dann noch weitere Fördergüter vom Transportband aufgenommen werden, wobei jeweils die vorhergehenden Fördergüter die Anschläge bilden. Zum Auslagern wird dann jeweils der Anschlag abgesenkt, welcher dem Regal zugewandt ist, auf welches die Fördergüter abgelegt werden sollen.

Nach einem weiteren Merkmal der Erfindung sind die Anschläge seitlich neben dem Transportband angeordnet und greifen von dort in die Bahn des Fördergutes ein. Um zu verhindern, dass durch einen einzelnen seitlichen Anschlag das Fördergut unter Umständen quer gestellt wird, sind vorzugsweise an den beiden Enden des Fördergerätes beidseitig des Transportbandes je zwei Anschläge vorgesehen.

Nach einem weiteren Merkmal der Erfindung sind die Anschläge als Längsschienen gestaltet, bilden beide Enden derselben Halteglieder und weist das vom Transportband weggerichtete Ende einen erhöhten Absatz auf. Dabei sind die Anschläge in mindestens drei Höhen, nämlich mit dem Absatz unterhalb des Transportbandes, mit dem absatzfreien Ende unterhalb und dem Absatz oberhalb des Transportbandes oder mit dem absatzfreien Ende oberhalb des Transportbandes, einstellbar. Auf diese Weise hat man mehrere Möglichkeiten, Fördergüter von den Regalen auszulagern. Wenn beispielsweise die von dem zu bedienenden Regal abgewandte Längsschiene so weit angehoben wird, dass das absatzfreie Ende oberhalb des Transportbandes zu liegen kommt, dann kann das Fördergut mittels des Transportbandes nur bis zu diesem Halteglied bewegt werden. Anschließend kann dann beispielsweise vom gegenüberliegenden Regal ein weiteres Fördergut übernommen werden. Hierzu wird die bisher unten liegende Längsschiene angehoben, so dass ihr Absatzende das auf dem Transportband liegende Fördergut sichert. Anschließend wird dann die gegenüberliegende Längsschiene ganz nach unten abgesenkt, so dass das gewünschte Fördergut aufgenommen werden kann und gegen das erste Fördergut als Anschlag bewegt wird.

Da die Fördergüter auf den Regalen nicht immer genau ausgerichtet sind bzw. vom Fördergerät nicht mittig aufgenommen werden, werden die Längsschienen zusätzlich zur Zentrierung verwendet. Hierzu weisen sie erfindungsgemäß je eine zum Transportband etwa waagrechte Auflagefläche auf und sind mit nach oben und außen ragenden Zentrierflächen für das Fördergut versehen. Dabei können die Längsschienen zur Bildung der Auflagefläche beispielsweise winkelförmig ausgebildet sein. Die Längsschienen sind nunmehr in eine Stellung anhebbar, in welcher deren Auflageflächen oberhalb des Transportbandes liegen. Diese entspricht vorzugsweise der dritten Höheneinstellung. In dieser Lage sind die Fördergüter vom Transportband abgehoben und werden während des Abhebens durch die Zentrierflächen in eine mittige Lage zum Transportband gebracht. Anschließend erfolgt dann wiederum die Ablage auf dem Transportband.

Die Zeichnung zeigt Ausführungsbeispiele der Erfindung. Es stellen dar:
- Figur 1: ein abgebrochen dargestelltes Regal mit einem schematisch gezeichneten Fördergerät beim Beginn des Auslagerns,
- Figur 2: eine Darstellung nach Fig. 1 mit einem ausgelagerten Fördergut,
- Figur 3: eine Darstellung nach Fig. 1 mit einem Anschlag in Mittelstellung,
- Figur 4: eine Darstellung nach Fig. 3 mit einem ausgelagerten Fördergut,
- Figur 5: eine Vorderansicht nach Fig. 4
- Figur 6: eine Darstellung nach Fig. 5 mit durch die Längsschienen angehobenem Fördergut.

Auf dem nicht näher dargestellten Fördergerät ist längsverschiebbar ein angetriebenes Transportband 1 gelagert, an dessen beiden Enden beidseits je zwei Längsschienen 2 und 3 unverschiebbar, aber heb- und senkbar angeordnet sind. Die Längsschienen 2 und 3 weisen an ihren einen Enden ein Halteglied 4 und an ihren anderen als weiteres Halteglied einen erhöhten Absatz 5 auf.

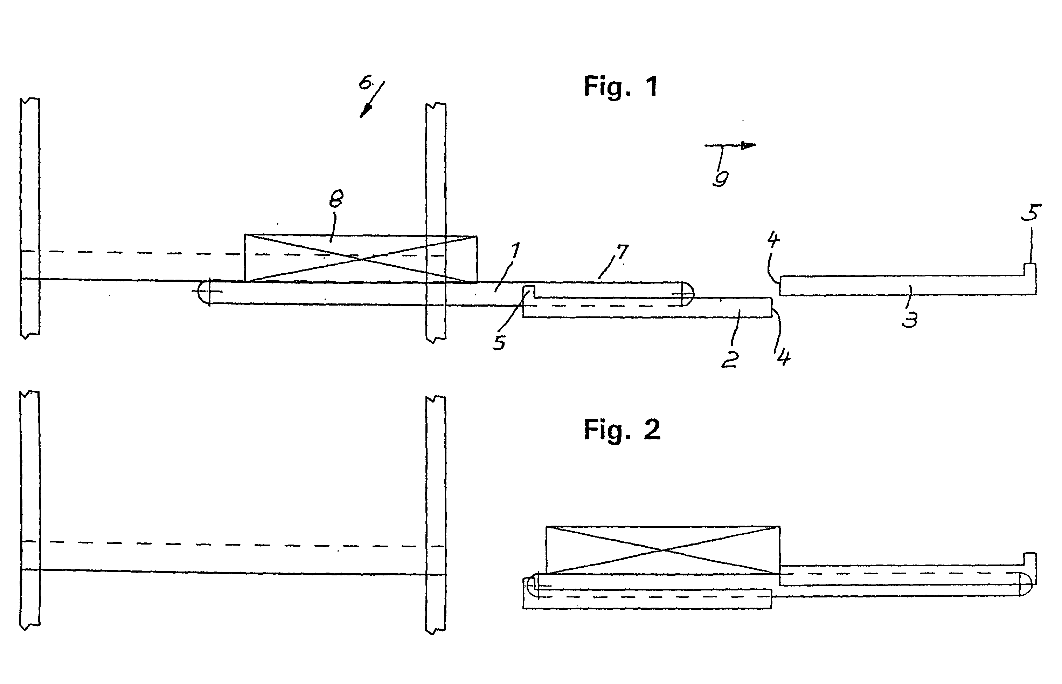

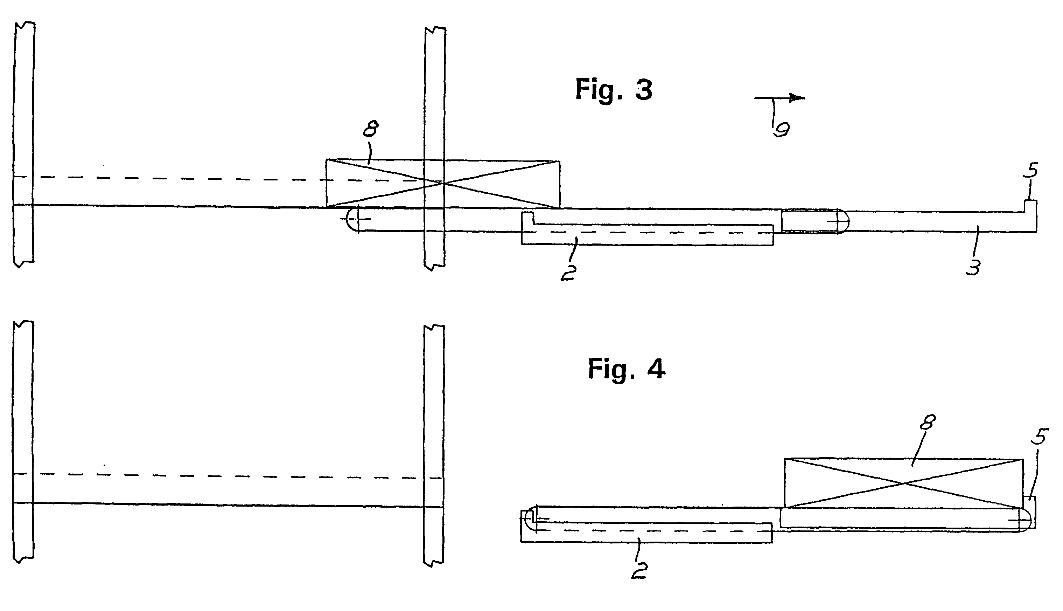

Die Längsschienen 2 und 3 können in den Ausführungsbeispielen nach den Fign. 1 bis 4 in drei Stellungen angehoben bzw. abgesenkt werden. In Fig. 1 befindet sich die Längsschiene 2 in ihrer untersten Stellung, wobei der Absatz 5 unterhalb der oberen Ebene 7 des Transportbandes 1 zu liegen kommt. Die am entgegengesetzten Ende liegende Längsschiene 3 befindet sich dabei in der obersten stellung, wobei das Halteglied 4 in den Transportweg des Fördergutes 8 hineinragt. In den Fign. 3 und 4 befindet sich dagegen die Längsschiene 3 in ihrer mittleren Stellung, wobei lediglich der erhöhte Absatz 5 in die Bahn des Fördergutes 8 hineinragt.

Wenn das Fördergut 8 vom Regal 6 ausgelagert werden soll, fährt das Transportband 1 in das Regal 6 hinein und nimmt das Fördergut 8 auf. Anschließend verschiebt sich das Transportband 1 in Richtung des Pfeiles 9, wobei das Fördergut 8 am Halteglied 4 der Längsschiene 3 aufläuft und dadurch seine Weiterbewegung gesperrt wird. Es nimmt dann die Lage nach Fig. 2 ein. Anschließend könnte, was nicht dargestellt ist, die Längsschiene 3 in ihre unterste Stellung entsprechend der Längsschiene 2 abgesenkt werden und das Fördergut 8 auf einem gegenüberliegenden, nicht dargestellten Regal abgelegt werden.

In den Fign. 3 und 4 kann dagegen das Fördergut 8 bis zum Absatz 5 der Längsschiene 3 bewegt werden und findet dort seinen Anschlag. Anschließend könnte dann noch vom gleichen Regal ein weiteres Fördergut übernommen werden.

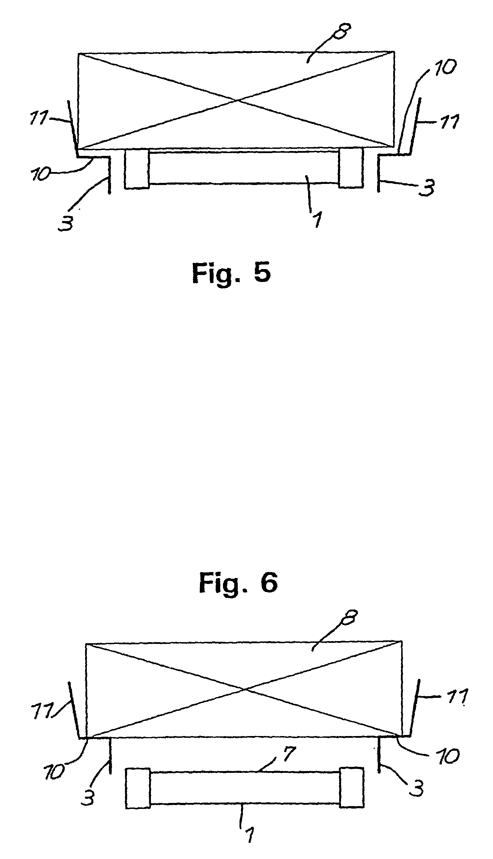

Die Fign. 5 und 6 zeigen eine Vorderansicht nach den Fign. 1 und 2, wobei das Fördergut 8 in Fig. 5 zunächst auf dem Transportband liegt, jedoch gegenüber diesem nicht zentriert ist. Um die Zentrierung zu erreichen, weisen die Längsschienen 2, 3 parallel zur Transportbandebene 7 verlaufende Auflageflächen 10 auf, welche mit nach oben und außen ragenden Zentrierflächen 11 versehen sind. Die Längsschienen 3 werden dann in eine Stellung nach Fig. 6 angehoben, in welcher deren Auflageflächen 10 oberhalb der Transportbandebene 7 des Transportbandes 1 zu liegen kommen. Diese Lage entspricht der dritten Höhenstellung, wie sie in Fig. 1 die Längsschiene 3 einnimmt. Durch die Zentrierflächen 11 wird dabei das Fördergut 8 beim Anheben in eine mittige Lage zum Transportband 1 gebracht. Anschließend können dann die Längsschienen 3 wieder abgesenkt werden bis das Fördergut 8 wieder auf dem Transportband 1 liegt.

## Patentansprüche

1. Fördergerät mit auf einem verschiebbaren Tisch gelagerten angetriebenen Transportband, **gekennzeichnet durch** mindestens zwei, an den beiden Enden des Fördergerätes in die Bahn des Fördergutes (8) eingreifende, heb- und senkbare Anschläge (4,5).

2. Fördergerät nach Anspruch 1, **dadurch gekennzeichnet, dass** die Anschläge (4,5) seitlich neben dem Transportband (1) angeordnet sind.

3. Fördergerät nach einem oder beiden der Ansprüche 1 bis 2, **dadurch gekennzeichnet, dass** an den beiden Enden des Fördergerätes beidseitig des Transportbandes (1) je zwei Anschläge (4,5) vorgesehen sind.

4. Fördergerät nach einem oder beiden der Ansprüche 2 bis 3, **dadurch gekennzeichnet, dass** die Anschläge als Längsschienen (2,3) gestaltet sind, beide Enden derselben Halteglieder (4,5) bilden und das vom Transportband (1) weggerichtete Ende einen erhöhten Absatz aufweist (5), wobei die Anschläge (4,5) in mindestens drei Höhen, mit dem Absatz (5) unterhalb des Transportbandes (1), mit dem absatzfreien Ende (4) unterhalb und dem Absatz (5) oberhalb des Transportbandes (1) oder mit dem absatzfreien Ende (4) oberhalb des Transportbandes (1) einstellbar sind.

5. Fördergerät nach Anspruch 4, **dadurch gekennzeichnet, dass** die Längsschienen (2,3) je eine parallel zur Transportbandebene (7) des Transportbandes (1) verlaufende Auflagefläche (10) aufweisen und mit nach oben und außen ragenden Zentrierflächen (11) für das Fördergut (8) versehen sind.

6. Fördergerät nach Anspruch 5, **dadurch gekennzeichnet, dass** die Längsschienen (2,3) winkelförmig ausgebildet sind.

7. Fördergerät nach einem oder beiden der Ansprüche 5-6, **dadurch gekennzeichnet, dass** die Längsschienen (2,3) in eine Stellung anhebbar sind, in welcher deren Auflageflächen (10) oberhalb des Transportbandes (1) liegen.

## Claims

1. A conveying apparatus having a driven conveyor belt mounted on a displaceable bench, **characterised by** at least two raisable and lowerable stops (4, 5) which enter the path of the conveyed material (8) at both ends of the conveying apparatus.

2. A conveying apparatus according to claim 1, **characterised in that** the stops (4, 5) are arranged laterally beside the conveyor belt (1).

3. A conveying apparatus according to one or both of claims 1 and 2, **characterised in that** two stops (4, 5) are provided on each side of the conveyor belt (1) at each end of the conveying apparatus.

4. A conveying apparatus according to one or both of claims 2 and 3, **characterised in that** the stops are in the form of longitudinal rails (2, 3), both ends thereof form retaining elements (4, 5) and the end pointing away from the conveyor belt (1) has a raised step (5), the stops (4, 5) being positionable at at least three levels, with the step (5) below the conveyor belt (1), with the step-free end (4) below and the step (5) above the conveyor belt (1) or with the step-free end (4) above the conveyor belt (1).

5. A conveying apparatus according to claim 4, **characterised in that** the longitudinal rails (2, 3) each have a supporting face (10) extending parallel to the conveyor belt plane (7) of the conveyor belt (1) and are provided with centring faces (11) for the conveyed material which project upward and outward.

6. A conveying apparatus according to claim 5, **characterised in that** the longitudinal rails (2, 3) are angular in shape.

7. A conveying apparatus according to one or both of claims 5 and 6, **characterised in that** the longitudinal rails (2, 3) can be raised to a position in which the supporting faces (10) thereof are above the conveyor belt (1).

## Revendications

1. Appareil de convoyage avec une bande transporteuse entraînée placée sur une table mobile, **caractérisé par** au moins deux butéés (4, 5) levables et abaissables s'engageant aux deux extrémités de l'appareil de convoyage dans la voie des matières transportées (8).

2. Appareil de convoyage selon la revendication 1, **caractérisé en ce que** les butées (4, 5) sont disposées latéralement à côté de la bande transporteuse (1).

3. Appareil de convoyage selon une ou les deux revendications 1 à 2, **caractérisé en ce que** deux butées (4, 5) sont chaque fois prévues aux deux extrémités de l'appareil de convoyage des deux côtés de la bande transporteuse (1).

4. Appareil de convoyage selon une ou les deux revendications 2 à 3, **caractérisé en ce que** les butées sont réalisées comme des rails longitudinaux (2, 3), forment les deux extrémités du même membre d'arrêt (4, 5) et l'extrémité à l'écart de la bande transporteuse (1) présente un talon (5) surélevé, les butées (4, 5) pouvent être réglées à au moins trois hauteurs, avec le talon (5) en dessous de la bande transporteuse (1), avec l'extrémité (4) exempte de talon en dessous et le talon (5) au-dessus de la bande transporteuse (1) ou avec l'extrémité (4) exempte de talon au-dessus de la bande transporteuse.

5. Appareil de convoyage selon la revendication 4, **caractérisé en ce que** les rails longitudinaux (2, 3) présente chacun une surface d'appui (10) s'étendant parallèlement au plan (7) de la bande transporteuse (1) et sont pourvus de surfaces de centrage (11) pour les matières transportées (8) faisant saillie vers le dessus et vers l'extérieur.

6. Appareil de convoyage selon la revendication 5, **caractérisé en ce que** les rails longitudinaux (2, 3) sont conformés de manière angulaire.

7. Appareil de convoyage selon une ou les deux revendications 5 à 6, **caractérisé en ce que** les rails longitudinaux (2, 3) peuvent être levés dans une position dans laquelle leurs surfaces d'appui (10) se trouvent au dessus de la bande transporteuse (1).
